# EUROPEAN PATENT APPLICATION

(11) **EP 2 242 258 A1**
(43) Date of publication of application: **20.10.2010**
(21) Application number: 09158042.3
(22) Date of filing: 16.04.2009
(51) Int. Cl.: H04N 5/44, H04N 7/173

(54) **Content access notification**

(71) Applicant: Panasonic Corporation, Kadoma-shi Osaka 571-8501 (JP)
(72) Inventor: Rey, Jose Luis, 63225 Langen (DE); Becker, Ralf, 63225 Langen (DE); Schlockermann, Martin, 63225 Langen (DE); Nakano, Toshihisa, Chuo-ku Osaka 540-6207 (JP); Kawaguchi, Toru, Chuo-ku Osaka 540-6207 (JP)
(74) Representative: Grünecker, Kinkeldey, Stockmair & Schwanhäusser Anwaltssozietät

(57) **Abstract**

The present invention allows notifications about online availability for TV programs that have been broadcast from broadcasters' web services (catch-up services). The notification functionality is integrated into an electronic program guide functionality in a manner that does not require any complicated multi-step user interaction. Users can download or watch by streaming a broadcast program that is available online via a web service upon the notification. The invention is particularly applicable for making notifications about programs availability free-of-charge.

## Description

The present invention generally relates to the presentation of audio and visual content for consumption. In particular, the present invention relates to electronic program guides (EPG).

Traditionally, there was a clear separation between content distributed by broadcast and content available over service networks, such as web content (Internet content). Broadcast content such as audio-visual content (known as TV or television content) is traditionally provided in a linear fashion utilizing broadcasting networks, for instance based on satellite, cable or terrestrial distribution systems (analog or digital).

More recently, with a rise in popularity of the Internet, audio-visual content has become increasingly available over the Internet. Internet-based audio-visual content is typically provided in a non-linear fashion (for instance, streaming or download) utilizing communications networks. Preferably, broadband communications networks are utilized (for instance, DSL).

Thus, each content type was provided using different distribution paths, i.e. broadcast content by a broadcast infrastructure (broadcast networks), and web content via service networks such as the Internet, or parts thereof, or any other IP-based network etc. In recent times, both traditional broadcast and web-based distribution paths have become more and more converging. On the one hand, traditional web content services are providing TV content, for example content on YouTube. On the other hand, traditional broadcast content providers offer so-called catch-up TV services, for example BBC iPlayer.

These catch-up TV services offer a non-linear access to broadcast TV content in the Internet. Typically, catch-up TV services provide free-of-charge access to archived content during a predetermined period of time, for example, all broadcast content of the last seven days. But also pre-TV (i.e. future) content might be available, which is typically a charged service. Current catch-up TV services offer PC-based access to the broadcast content using a streaming and /or download distribution mechanism.

Initially, catch-up TV services were mainly accessed using a personal computer (PC), which is typically equipped with a network interface (preferably broadband) allowing connection to the Internet. Recently, however, also consumer electronic (CE) devices are being equipped with (broadband) network interfaces. For example, digital television sets (DTV) may have a broadcast interface capable of receiving broadcast programs over the air, such as DVB-T, via satellite (DVB-S), via cable or via broadband network (IP-multicast), and at the same time may be provided with a bidirectional connection to the Internet, or, more generally speaking, any service network. Digital television sets are able to display audio/video web content, i.e. support typical widespread web codex sets, such as H.264 video, HE-AAC audio, etc. Generally, the present invention is applied in the framework of such DTV equipment.

Another recent development in audio-visual consumer electronics are electronic program guides (EPG). Electronic program guides provide information with respect to scheduled broadcast television or radio programs. The information is typically displayed on the TV screen, with various navigation functions. On the one hand, electronic program guides provide information that has been conventionally made available through program journals printed on paper, but also implies additional functions such as scheduling of content or future recording by a digital video recorder (DVR) or a personal video recorder (PVR). EPG on-screen information may be delivered by a dedicated channel or assembled by the receiving equipment from information sent by each program channel, for instance during the vertical blanking interval.

Typically, additionally delivered broadcast-related information includes information or metadata about broadcast content. The information may relate to the currently broadcasted content, or may even relate to content that is scheduled to be broadcast in the future. The electronic program guide EPG is generated in receiving devices therefrom.

Currently, the EPG implemented in digital TV sets enables the user to mark programs of interest and the TV reminds the user of upcoming broadcast programs so that the user does not miss them. A typical way of accomplishing this is by showing a pop-up notification of an upcoming marked program while another broadcast channel is being watched. If the user is not currently watching TV, then this notification is missed.

A default procedure for watching missed programs is to record these programs on a PVR (Personal Video Recorder), such as a TiVO-like product, and to watch them later. However, such a functionality cannot be implemented into a TV, since most digital TV sets do not have storage means.

Nevertheless, an additional possibility has emerged for watching missed programs on the web, via so-called catch-up services. The current trend on the broadcasters' side is to make TV programs available on their catch-up servers, via the Internet. This is becoming a widespread practice implemented by broadcasters across Europe, the US and in Japan. Many broadcasters offer content online for on-demand streaming and/or download. Moreover, not only catch-up services but also pre-broadcast programming services are available on the network (i.e., pre-TV content).

Such services are particularly popular if they are free-of-charge. However, not all programs are free. Usually only broadcasters' own productions are free, possible free access being further limited to country or region. An additional limitation of the free-of-charge access concerns a particular period of time during which viewing over the web is free-of-charge. Typically, web contents included in catch-up services are free-of-charge within the network for a predetermined period of time after the actual broadcasting of the program. Such a period of time is, for instance, between 5 and 20 days, or preferably, about 1 week (7 days). After the predetermined period of time has expired, for instance after 1 week (7 days), the web contents may remain available on the network on the catch-up service, but only at a charge. Generally, prices of programs offered by catch-up services will be changed time-by-time, such as day-by-day.

Pre-TV services are generally available on the network at a charge.

Conventionally, products enabling both program consumption from broadcast and from service networks, make a clear separation between what is available on the web and what is available from broadcast TV. For example, if a user misses an episode of a particular series, then the user has to remember which episode number, on which date, and on which channel, and has to input this information into the Internet browser of the TV set, pointing at the broadcaster's web servers via the remote control, and then start the web video player of the TV set to check availability of a lost episode and, if possible, retrieve the audio/visual content relating to the missed program. However, the required operations for a user are rather complicated.

More recent developments show that it is possible to integrate web content into electronic program guides. However, even for EPGs, integrating web content (broadband content), the drawback remains that if a user missed watching a marked program, the user has to search for that program on the catch-up service manually, by navigating through the menus of the EPG. Furthermore, since the price of the program or the condition of availability free-of-charge may be changed day-by-day, watching conditions must be checked manually. User operation therefore remains complicated.

The present invention aims to provide a device and a method for implementing an improved electronic program guide, providing a user with easy access to information related to desired contents from network based catch-up services.

This is achieved by the features of the independent claims.

According to a first aspect of the present invention, an electronic notification device for notifying a user about the availability of a program on a network that has been broadcast in the past, is provided. The electronic notification device comprises a user interface for indicating programs scheduled for broadcast and for marking a broadcast that is desired for watching. The device further comprises a network interface for connecting the electronic notification device to the network. Further, the electronic notification device includes a marked program holding unit for holding information about the marked program. In addition, the device comprises a viewing checking unit for determining, after the time of broadcast, whether the marked program has been watched. A program availability checking unit is provided in the device for checking availability of the marked program on the network. Finally, the device comprises a notification unit for notifying a user about availability on the network of a marked program that has been broadcast but has not been watched.

According to a second aspect of the present invention, a method of notifying a user about the availability of a program on a network, that has been broadcast in the past, is provided. The method is performed by an electronic notification device and comprises a step of marking a program, which is indicated as scheduled for broadcast by a user interface of the electronic notification device. Further, the method comprises the steps of holding information about the marked program and of determining, after the time of broadcast, whether the marked program has been watched. Moreover, the method according to the second aspect includes the steps of checking availability of the marked program on the network, and notifying a user about availability on the network of the marked program, if the marked program has been broadcast but has not yet been watched.

It is the particular approach of the present invention to notify a user of audio/visual consumer electronics equipment, such as a digital TV set, about the availability on a network based service, such as catch-up TV service, of a desired broadcast program that has been missed to watch. The desired program is therefore marked by the user via a user interface such as an electronic program guide (EPG). According to the present invention it is then monitored whether the marked program has been watched from broadcast or has been missed. In the latter case, availability on the network service is checked, and a respective notification is issued.

Preferably, the user interface of the electronic notification device is an integrated part of an electronic program guide that is provided by the electronic notification device. Thereby, the electronic program guide is extended by including the notification functionality according to the present invention.

Preferably, the electronic notification device further comprises a free-of-charge period calculating unit for calculating a period of time during which a marked program is available on the network for watching free-of-charge. Further, preferably, a notification unit additionally notifies a user about the period of time during which the program is available on the network for watching free-of-charge. Alternatively, the notification unit only notifies a user about availability of the program only during the period when it is available free-of-charge.

More preferably, the free-of-charge period of time is calculated based on the information about the marked program held in the marked program holding unit, current time information and a period rule.

Also preferably, the calculation of the free-of-charge period of time is additionally based on an availability delay, said availability delay indicating a duration how long it takes after actual broadcast transmission until the same content is available online free of charge. For instance, the content may be made available online by a catch-up service only a certain time after start or end of the broadcast transmission (either scheduled or actual). The delay can be preset by the broadcaster or provider, for each or certain programs, but may also be variable (for instance depend on the length of the program itself).

Further preferably, the free-of-charge period calculating unit itself calculates the period rule, and/or the availability delay. The calculation can be based on information, for instance about the program and/or the broadcaster, that is retrieved from the network or otherwise available within an Electronic Program Guide. Alternatively, the period rule is a predetermined period rule (default period rule). A default period rule may be preset by a manufacturer of the device, but also updated or changed via firmware or manually by a user having the respective right.

Alternatively preferably, an availability period calculating unit is provided that calculates the generally limited period of availability either free-of-charge or for a charge.

Preferably, a program marked and checked for availability on the network comprises audio/visual content, such as TV content (i.e. a TV program). Accordingly, the present invention is particularly suitable for application in the framework of the digital TV world that is more and more integrated with an IP-based world.

According to a preferred embodiment, a desired program is available on the network for download. Accordingly, the contents can be downloaded for watching any time that is convenient for the user and can be watched later. For instance, a download can be started immediately upon the user being notified of availability of the program. More preferably, the user interface further comprises means for initiating the download upon a simple user operation such as a manipulation of a particular element included in the notification with a remote control or other suitable input means.

According to an alternative preferred embodiment, the program is available on the service network for being watched via streaming. Accordingly, it is alternatively possible to watch the missed program if the user's equipment does not at all include storage means, or no sufficient free storage capacity is available.

Preferably, a notification about availability of a marked missed program on the network is issued automatically, if the device is switched on.

Alternatively, preferably or at the same time, the issued notification is held by the device and presented to the user upon a user request. Thereby, it is enabled that the notification is indicated to the user at any appropriate time, in particular, if the user has been absent at the moment when the notification was initially issued. More preferably, the user request for notifications regarding availability of missed marked programs is input via a particular input means of the user interface, such as operating a specific virtual button displayed on the screen of the EPG. This enables a particularly easy operation and renders obsolete any complicated navigation through multi-level program menus.

Preferably, the network on which the desired program is checked for availability is the Internet. Alternatively, another public or private service network can be connected to the device of the present invention and can be checked for program availability, preferably an IP-based network, thereby adding a broadband access.

Preferably, the electronic notification device, according to the present invention, is included in a consumer electronic device such as a TV-receiver, digital TV-set, Blu-Ray-player/recorder, DVD-player/recorder, personal video recorder (PVR), set-top box (STB) or game console product.

According to a particular aspect of the present invention, a computer program product, including a computer readable medium, having computer readable program code embodied thereon, is provided. The program code causes a computer to execute the steps of a method according to the second aspect of the present invention when loaded into the computer.

Further embodiments of the present invention are the subject matter of the dependent claims.

Additional features and advantages of the present invention will become apparent from the following and more particular description, as illustrated in the accompanying drawings, wherein:
Fig. 1 schematically illustrates an overall system configuration in which the present invention is applied;
Fig. 2 illustrates an overview over the component of an electronic notification device according to a preferred embodiment of the present invention;
Fig. 3 provides a more detailed illustration of a free-of-charge period calculating unit according to an embodiment of the present invention;
Fig. 4 shows screenshots of an electronic program guide in a status when a program is marked and in a later status when notification of availability of online content is performed, and
Fig. 5 is a flowchart showing an exemplary procedure according to the present invention, including a program availability calculation scheme.

Illustrative embodiments of the present invention will now be described with reference to the drawings.

The present invention provides a particularly easily operable and user-friendly interface by integrating a function of reminding a user of marked programs that have been missed into an electronic program guide. The system checks whether the user has watched marked content, and informs the user when missed broadcast programs are available online, and for how long they will remain online. Preferably, the system further informs the user when programs are available free-of-charge, and preferably for how long they will remain free-of-charge. Typically, free-of-charge access is limited to a certain time window, (for instance seven days after broadcast), and the content remains available with charges for a later period. A few button presses on the EPG screen allow the user to view the free-of-charge web content according to his/her interest.

The respective functionality is integrated in the same electronic program guide (EPG) that the user currently uses for browsing, checking broadcast program schedules and making markings of favourite programs, thus rendering it unnecessary for the user to have a PC or to have knowledge about the web portal offerings and the particular rules of availability of each broadcaster.

The solution according to the present invention is advantageous over a traditional PVR in the sense that it also enables the watching of programs that have overlapping broadcast schedules and it does not require the TV to have storage means, since after broadcast streaming access via a broadband network interface may be made available.

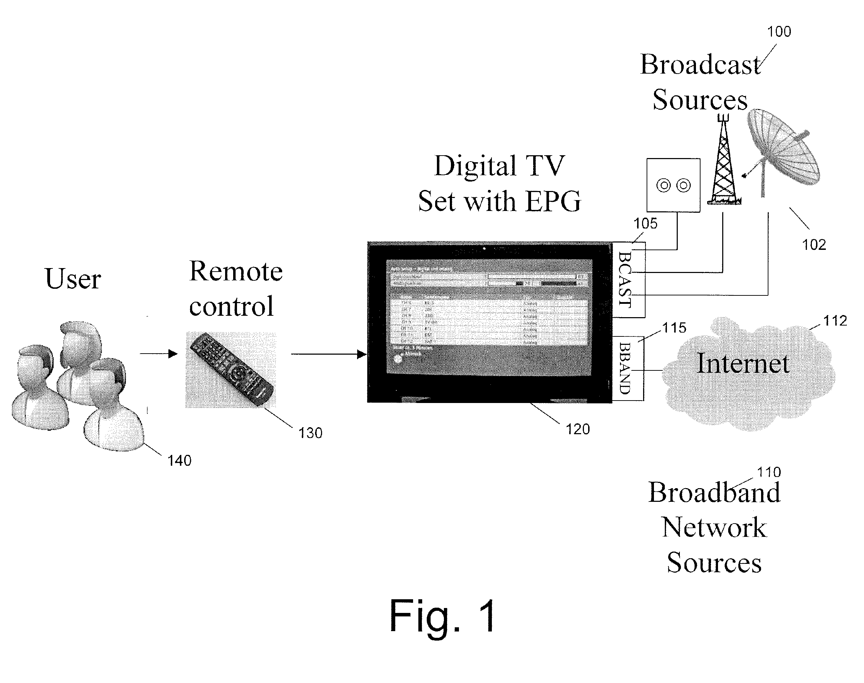

Fig. 1 illustrates the overall scenario in which the present invention is applied. A user 140 interacts with a television set 120, typically through a remote control unit 130, and browses the EPG (schematically illustrated as displayed on the screen of the digital TV set 120) to select the content that may be received from different sources (100, 110). The sources are, for instance, broadcast sources 100 such as cable TV, digital terrestrial TV or satellite TV, or network sources 110, available via the Internet 112 or even a proxy server located at the Internet service provider's network, or any kind of network, preferably broadband.

Access from the digital TV device 120 to broadcast sources and broadband network sources is provided via respective interfaces, 105 and 115.

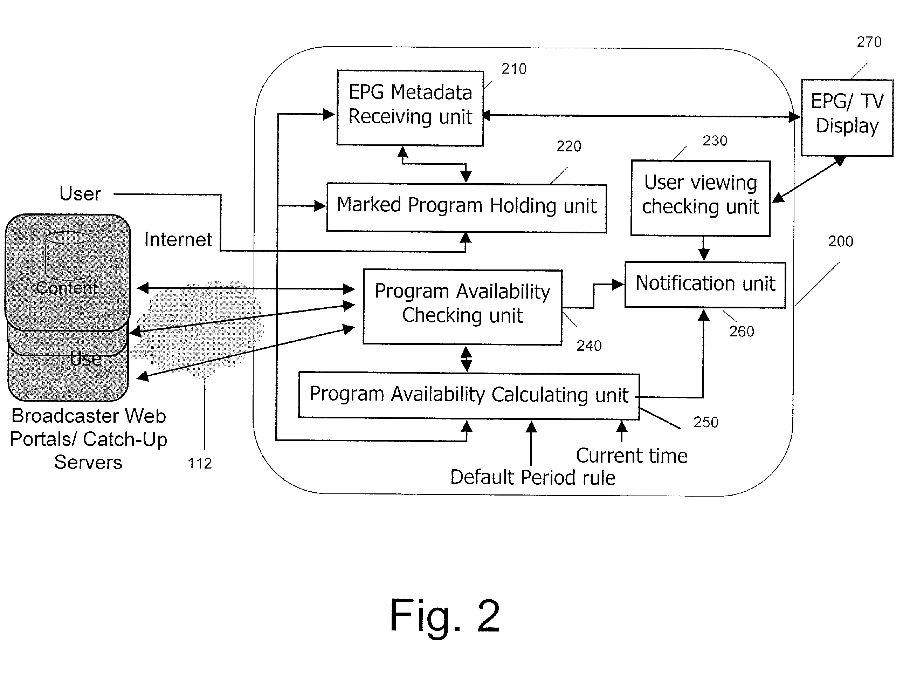

It is further noted that it is not compulsory to have broadcast source 100 if the broadcast programs are re-sent via broadband network services (IP multicast), which is the case in telecommunication provider's IPTV deployments. Moreover, it is noted that the components of an electronic notification device according to the present invention, that will be described in more detail below with reference to Fig. 2, may be integrated in digital TV set 120 but may equally also be provided in other consumer electronic devices, such as DVD recorders, personal video recorders, or set-top boxes.

Fig. 2 illustrates an overview of the functional components of an electronic notification device 200 according to the present invention.

The device comprises EPG metadata receiving unit 210, marked program holding unit 220, user viewing checking unit 230, program availability checking unit 240, program availability calculating unit 250, and notification unit 260. The functionality of each of the above identified units will be described in more detail in the following:
EPG metadata receiving unit 210 functions to receive, store and share with other units the broadcast program schedule received from the broadcaster. The information is typically contained in service information streams (SI) such as those in accordance with the standard DVB-SI. SI streams are embedded in the broadcast audio/video stream, and they cover a variable time interval, typically the next seven days. SI streams are also typically embedded in the re-transmission of broadcast programs over IP multicast protocol as used in IPTV systems operated from telecommunications providers, such as Deutsche Telekom.
Additionally, and since some broadcasters do not send SI streams, the broadcast program schedules may be retrieved, either in their entirety or partially, from other sources such as GuidePlus+. GuidePlus+ is an electronic program guide that is available in European countries, wherein EPG service data are downloaded automatically at particular periods of time, such as overnight.

After acquisition, by EPG metadata receiving unit 210 the information is shared upon demand with the marked program holding unit 220 and the program availability calculating unit 250.

Marked program holding unit 220 stores an entry in a database (or similar storing means) for each broadcast program that is marked by a user (i.e. user's favourites). Preferably, the entry comprises at least the following items of information: program name (series name), title, episode number, etc.), the broadcast channel name (for instance BBC, ZDF, and others), and the date of marking (year, day, time).

Optionally, additional pieces of information can be stored in the entries, including: episode number, date, program key words, actors, director, genre, popularity, ranking, and summary. In general, any piece of information available through the metadata information streams (SI streams) can be stored in marked program holding unit 220 for each program entry.

Program availability checking unit 240 serves for checking the availability on the network for those programs marked by the user. Preferably, online availability for free-of-charge is checked. The component implements the query format and logic specific to each broadcaster's API (application program interface). Generally, each broadcaster makes content available online via different web portal and database architectures. Thus, different query formats, parameters and rules are required. The query formats are made available either through public availability of the APIs or through business-to-business agreements with broadcasters. Queries from the program availability checking unit 240 to web servers (catch-up servers) are triggered by the program availability calculating unit 250 descried below.

As indicated above, a query may include different pieces of information parameters; these are usually extracted from the (broadcast/multicast) SI streams and made available to the program availability checking unit 240 via program availability calculating unit 250 from information stored in the marked program holding unit 220.

According to alternative embodiments, the user might or might not be allowed to complete the information through explicit input.

Program availability checking unit 240 has direct access to service network 112, preferably via a broadband interface.

Program availability calculating unit 250 preferably functions for calculating a period of availability of a program over the network free of charge (free-of-charge period calculating unit). However, in the same manner, also a period of general program availability over the network may be calculated in accordance with the present invention.

According to a preferred embodiment, program availability calculating unit 250 is configured for calculating two values: 1) the "free-of-charge period rule" that indicates a length of time during which the content is available free-of-charge at online sources such as the broadcaster's web portal (catch-up server), and 2) the "free-of-charge online availability delay" that indicates how long it takes after actual broadcast transmission until the same content is available online free of charge. The actual period of availability of a program free-of-charge (FoC period) begins at a time equal to the free-of-charge availability delay after the actual broadcast time (broadcast start time or broadcast finish time according to different embodiments). The FoC period ends at an instance of time that is the result of adding the length of time defined in the free-of-charge period rule to the time instance of beginning. The respective time data indicating beginning and end of the FoC period of time are forwarded from calculating unit 250 to notification unit 260.

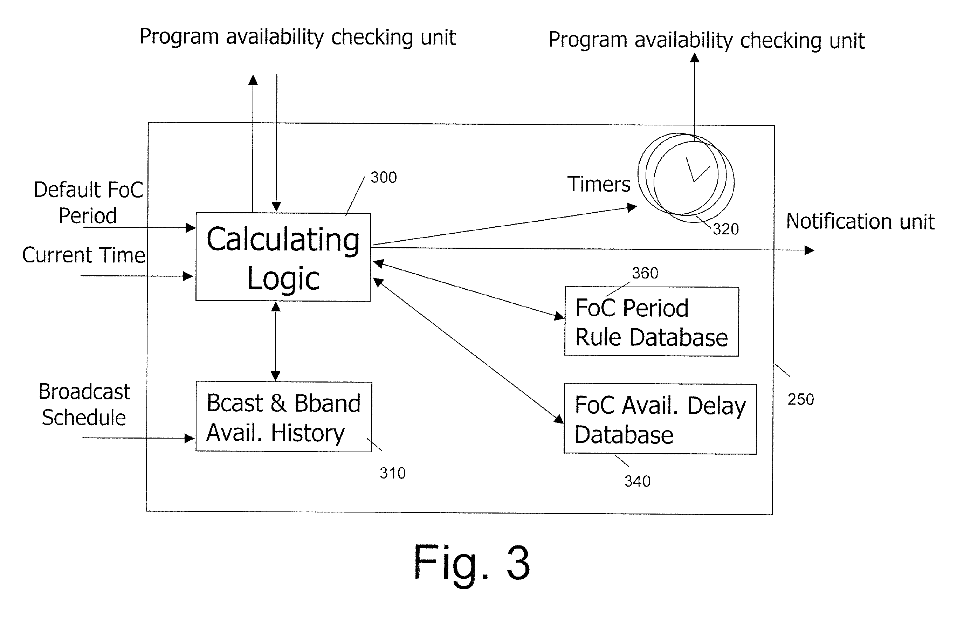

Program availability calculating unit 250 includes the following sub-components, which are shown in the more detailed illustration of Fig. 3:
Free-of-charge period rule database 330 is a database which has entries for each marked broadcast program containing the respective period rule. Generally, different situations with respect to the period rules may apply, depending on the broadcaster.

The period rules may be static or dynamic. Dynamic period rules may change over time, which need to be detected by keeping a history (described below). Period rules may also come directly from the broadcaster via SI streams or other means. In this case, program availability calculating unit 250 does not need to calculate the rules by itself.

In principle, period rules may be different for each program and for each broadcaster, but in most cases there is a set of common rules depending on the channel and other attributes of the program. Such a common rule set is called the "default FoC period rules" (FoC stands for free-of-charge) in this specification. The default rules are pre-set time intervals for free-of-charge availability of content that are input to the FoC period rule database. Examples of such rules are: "content is free if not older than seven days", "last two episodes of series are free", or even "all episodes of a series are free".

For instance, the rule "content is free if not older than seven days" could apply by default to those programs of the genre "soap opera" and the period rule "all episodes of a series are free" could apply to the genre "news". The pre-set period rules are mainly used the first time a check of availability is made, and they serve to minimize the number of search queries, constrain the search query for free-of-charge content, optimize search time, and minimize received data.

Free-of-charge availability delay database 340 includes entries for each marked broadcast program containing its FoC availability delay.

Broadcast and broadband availability history record unit 310 contains a history of actual broadcast transmissions for marked programs (date, time) and information regarding when and for how long the same content has been made available online (that is, the FoC availability delay and FoC period rule described in detail above). The results of the queries made by program availability checking unit 240 are stored herein.

Additionally, unit 310 stores information on past broadcast schedules. The information is not only restricted to marked programs, but full schedules are also stored. This enables a second functionality of the unit, which determines whether a first-time program marking points to a single-occurrence or multiple-occurrence type of program by observing the frequency of such a program over a time interval. The total amount of data stored in the unit (and thus the time period covered) depends on the amount of storage available in the TV set. At least, the period of time should comprise the most demanding "FoC default period rule" known. It can be updated via firmware or be changed by the user.

Timers database 320 of Fig. 3 is responsible for triggering the program availability checking unit 240 to query for availability of online content. The unit uses the FoC availability delay values as parameters to set up timers.

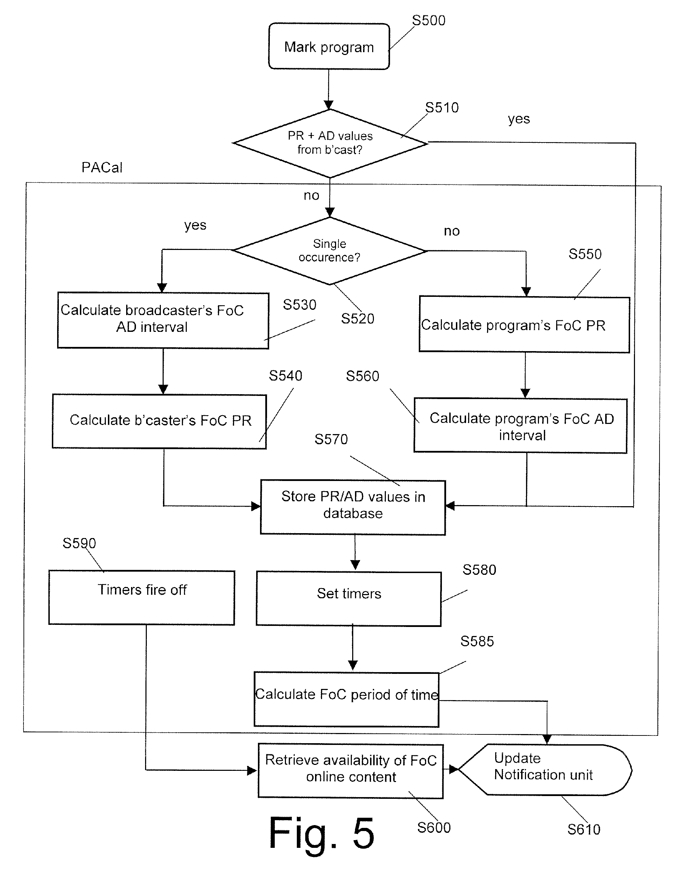

The above-mentioned units are in direct communication with calculating logic 300 that performs the main functionality of program availability calculating unit 250, described above. A more detailed description of an exemplary calculation scheme as performed by calculating logic 300 is described below with reference to the flowchart of Fig. 5. Additionally, calculating logic 300 communicates with program availability checking unit 240 for sending out queries for available online content and receiving marked program information. Additionally, calculating logic 300 receives the default FoC period rules described above. A further outside connection is provided from EPG metadata receiving unit 210 to broadcast and broadband availability history record 310. Thereby, the broadcast schedule is provided.

It is further noted that there may be a situation (depending on particular broadcasters), wherein the information received from a broadcaster already contains the "free-of-charge period rule" and the "free-of-charge online availability delay". In this case, the calculation by calculation logic may be obsolete, with respective values each to be transferred to the program availability calculating unit 250.

Referring back to Fig. 2, user viewing checking unit 230 and notification unit 260 are described in the following.

User viewing checking unit 230 serves for checking whether or not the user has watched the marked program. The notification information to be presented on the notification board is updated depending on the result of the check.

Notification unit 260 is configured for notifying availability and preferably the free-of-charge period of a marked program based on information provided by units 230, 240 and 250 communicating therewith. According to a preferred embodiment, the following three types of information are applied: 1) whether the program has been watched or not, 2) whether the program is available online free-of-charge, or not, and 3) how long it will be available for free and how much time remains free-of-charge.

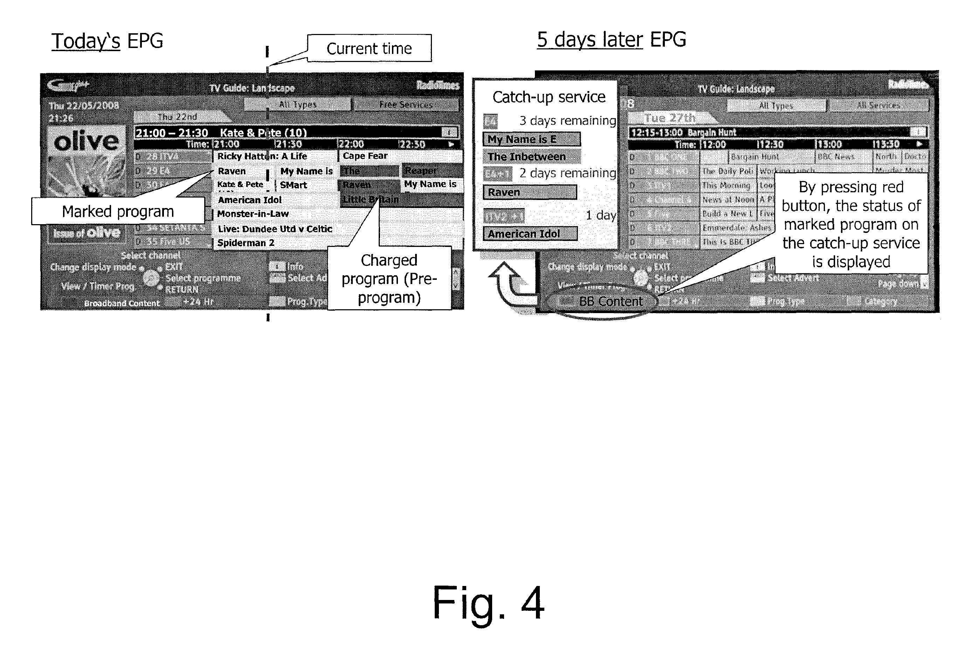

Typically, a notification board is displayed in a visible area of the EPG screen, as illustrated in Fig. 4. Notification unit 260 also serves for displaying, in a user-friendly manner, the responses to the availability checks by program availability checking unit 240.

As can be seen from the screen shot in the right hand side of Fig. 4, according to a preferred embodiment the status of the availability of marked programs on a network service (catch-up service) is displayed by pressing a particular on-screen button. As can be seen from the screenshot, the notification pop-up window according to the embodiment comprises a list of missed programs available from catch-up service together with an indication as to how long these programs will remain available.

A general procedure of executing a method in accordance with an embodiment of the present invention will now be described with reference to the flow chart of Fig. 5.

For the purposes of the following detailed description, it is assumed that two types of programs can be broadcasted: single-occurrence and multiple-occurrence programs. Examples of single-occurrence programs are Hollywood blockbusters shown on broadcast, wherein each of a plurality of transmissions is considered to be independent, although they might be sent a number of times during a given period of time. Examples of multiple-occurrence programs are fixed-scheduled episodes of multi-part productions, series, "sitcoms", soap operas and similar, as well as fixed-schedule afternoon news and talk shows.

The process starts with step S500, wherein a user marks a program of interest in the electronic program guide (EPG). This means that he/she wants to be reminded when transmission is imminent. Such a functionality is typically available on contemporary digital TV sets.

EPG metadata receiving unit checks in step S510 if there is any kind of information in the SI streams (or other means for providing broadcast schedule data) that determines whether the program is made free-of-charge online or not. If no such information is found, processing flow proceeds to step S520, wherein a routine of the program availability calculating unit 250 for calculating such information is started.

In each case, the received or calculated information is stored in step S570. Based thereon, the FoC period of time is calculated in step S585, for instance in a manner as described above in connection with Figs. 2 and 3. The result is transmitted to the notification unit 260 for update.

In step S520, the program availability calculating unit checks whether the program is of type single-occurrence or of type multiple-occurrence. This is done by parsing the stored information on past broadcast schedules stored in the sub-component "broadcast and broadband availabilities history record" 310. For instance, if titles of programs are very similar and have the same schedule (day of week, time of day) over a number of occurrences (for instance, over a month), then it can be assumed that this program is of type multiple-occurrence. If the program is not found in the broadcast schedule data available, then it is of type single-occurrence.

If the program is of type single-occurrence (S520: yes), the following cases may apply:
If FoC availability delay for this broadcast channel is available (because already calculated using N previous markings), then calculation unit 250 shall set a timer to detect online availability. N is a predetermined integer parameter that will be explained below.

Otherwise, if there is no information of on-line availability delay for this broadcast, then the current marking shall be used to calculate the FoC availability delay (S530) (until N markings are used).

Further, if no period rule is available yet, then the current markings shall be used to calculate it (S540).

The respective processing steps, which have been briefly summarized above, will be described in more detail below.

If the program is of type multiple-occurrence (S520: no), the following processing applies:
If the episode of the program is marked for the first time, then there is no period rule available for this pair of program and broadcast channel. Hence, it shall be calculated (S550).

Next, the calculation of the FoC availability delay is started in step S560.

The processing of the respective method steps will now be described in more detail below. The description starts with an exemplary method for calculating the FoC period rule.

Firstly, it is noted that, as already indicated above, period rules might already be provided by the broadcaster for each multiple-occurrence program.

Additionally, default period rules are pre-set by the manufacturer in the TV set to cover the period of time for which the broadcast and the broadband availability history record shall store scheduled data. The manufacturer might update these via firmware updates, and if allowed by the manufacturer, the user might modify them.

For those cases where none of the above applies, in the following, mechanisms for calculating the FoC period rule are described.

If the program is of type multiple-occurrence and no "period rule" is given, then the program availability calculation unit 250 shall trigger the program availability checking unit 240 to perform a query to the specific broadcaster for available content with that program name. Since typically the titles of multiple-occurrence programs have a high-degree of similarity, the logic 300 in the program availability calculating unit 250 shall detect which is the common part in the title and its fixed schedule, and set these as parameters for the query. In typical broadcast schedules a feed line or a semicolon or hyphen separates the series title and the episode title.

As result, the program availability checking unit 240 receives a set of past episodes of that multiple-occurrence program already available free-of-charge online. Now, the program availability calculating unit calculates the free-of-charge period rule by comparing the broadcast transmission date of the oldest free-of-charge episode and the current date. At this point, an entry can be created in the period rule database subcomponent 330, for use in future queries for the same pair of program and broadcast channel.

Additionally, the procedure described allows to ascertain the "next episode's broadcast time" that is when the next episode will be "aired" on broadcast TV.

The FoC period rules obtained for multiple-occurrence programs are stored in the FoC period rule database 330 and apply, in the simplest implementation, to multiple-occurrence programs with the same title and from the specific broadcaster. More complex schemes
where different period rules are stored per program, genre, daytime, or any additional parameter are also possible, but are not described in detail herein.

In the following, the procedure for calculating an FoC period rule in the case of single-occurrence programs is described. In this case, the program availability period calculating unit 250 arranges for a regular query (i.e.: set a timer) to the broadcaster's servers to check if that program is still available in the catch-up servers. The query shall be repeated until the query is no longer successful, thereby determining the FoC period rule. The notification unit is updated accordingly.

The queries are sent at time instants equal to t = T_bb_avail + i*T_cu, where T_bb_avail is the time instant where the specific single-occurrence program was made available online, the index i takes the values i = 1, 2, ...n, and T_cu is the catch-up server query frequency for single-occurrence programs expressed in units of time. T_bb_avail values are stored in the broadcast and broadband availability history record 310.

The FoC period rules obtained for single-occurrence programs are stored in the FoC period rule database 330 and apply, in the simplest implementation, to all programs from that broadcaster. More complex schemes where different period rules are stored per program, genre, day, time, or any additional parameter are also possible, but not described in detail herein.

In the following, an example is given:
If the program has been made available online on T_bb_avail = {Thursday, April 2, 2009, 19:50}, then a query shall be sent to the catch-up server on the following days also at 19:50.
If the latest successful query took place on T_bb_avail + i*T_cu = {Wednesday, April 8, 2009, 19:50}, i.e. i = 6 and T_cu = 1 day, then the FoC period rule is seven days. This is, in fact, a typical value for current catch-up offerings.

This period rule can now be stored for this broadcast channel and assumed to be applicable to all single occurrence markings for this channel.

In the following, exemplary methods for calculating the FoC availability delay will be described in detail. The description starts with the case of single-occurrence programs, summarized by step S530. The FoC availability delay is calculated for single-occurrence programs for a specific broadcast channel.
1. Starting from the point in time after the broadcast transmission of that program has been finalized, or immediately if the actual broadcast transmission has already taken place, the program availability period calculating unit 250 shall arrange for a query for that program to be sent by the program availability checking unit 240 regularly every time interval Tq to the broadcaster's server, for instance, every Tq = 5 minutes, and stop this process when the query is successful. The time instant resulting therefrom, T_bb_avail, is specific for each program and is stored in the broadcast and broadband availability history record 310. To avoid any deadlock, the querying shall take place up to a maximum period of time of D*T_program, where T_program is the length of the program of interest and D is a tuning parameter. The typical value for D is between 1 and 3.
   If after a maximum time, D*T_program, after the actual broadcast transmission date of the program (T_end-actual-bcast-tx), there is still no success, the querying is stopped. It shall then be assumed that this single-occurrence program is not available free-of-charge from the broadcaster's web servers. A corresponding entry shall be made into the databases. Only the user may now modify the maximum query time and restart additional queries manually from the EPG. This might be the case when broadcasters change their policy for online content availability, in this case the user can counteract and reactively make requests.
2. After the first successful query, and in order to establish a check interval common for all single-occurrence programs of this specific broadcast channel, the procedure is repeated for any N - 1 subsequent single-occurrence marked programs of that specific broadcast channel, for instance, a total of N = 5 queries. Alternatively, a more exact variant of this method would be to store the different values obtained depending on programs, genre or other availability attributes
3. Using the N results stored, the check interval determined by the minimum and maximum of FoC availability delay values for single-occurrence programs of that specific broadcaster can now be calculated as the interval (FoCAvailDelay_min_so, FoCAvailDelay_max_so) and the interval can be stored and associated to subsequent markings of single-occurrence programs of that broadcaster (S570).

In all cases, FoC availability delay values resulting from these queries are stored in the broadcast and broadband availability history record 310.

A slightly modified version of the method described above is used if the programs are of the type multiple-occurrence. The modified version will be described in the following:
1. Starting from the point in time after the broadcast transmission of the marked episode program is finalized, or immediately if the actual broadcast transmission has already taken place, the program availability period calculating unit 250 shall arrange for a query for that episode to be sent by the program availability checking unit 240 regularly every Tq to the broadcaster's server, for instance, every Tq = 5 minutes, and stop this process when the query is successful. The time instant resulting therefrom, T_bb_avail is specific to each program and is stored in the broadcast and broadband availability history record 310. To avoid a deadlock, the querying shall take place up to a maximum period of time of D*T_ program, where T_program is the length of the program of interest and D is a tuning parameter. A typical value for D is between 1 and 3.
   If after this maximum time D*T_ program and after the actual broadcast transmission date of the program (T_end-actual-bcast-tx) there is still no success, the querying is stopped. It shall then be assumed that this multiple-occurrence program or this particular episode is not available free-of-charge from the broadcaster's web servers. A corresponding entry shall be made into the databases. Only the user may now restart and modify maximum query time (D*T_ program) for additional queries manually from the EPG. This might be the case when broadcasters change their policy for online content availability. In this case the user can counteract and reactively request.
2. After the first successful query, the procedure described under item 1. above is repeated for a number N - 1 of marked text episodes of that specific multiple-occurrence program and broadcast channel combination, for instance, a total of N = 5 queries. The next episode's broadcast time is ascertained when the period rule is calculated, as described above. The program availability period calculating unit 250 shall coordinate this procedure and no further marking is required. The interim FoC availability delay values resulting from these queries are stored in the broadcast and broadband availability history record 310.
3. Using the N results stored, the check interval determined by the minimum and maximum of FoC availability delay values for this specific multiple-occurrence program of a specific broadcaster can now be calculated as the interval FoCAvailDelay_min_mo, FoCAvailDelay_max_mo) and can be stored and associated to the specific multiple-occurrence program of that broadcaster (S570).
4. After the FoC availability delay is available, program availability period calculating unit 250 shall set a timer (S580) to trigger availability checks as will be described in more detail below for each following episode, as long as there are next episodes of the multiple-occurrence program.

In all cases, FoC availability delay values resulting from these queries are stored in the broadcast and broadband availability history record 310.

In the following, the subsequent steps of scheduling online availability checks triggered by the said timers (S590) will be briefly described.

In the case of single-occurrence programs, the following two steps are performed:
1. Queries for any marked program on this broadcast channel are sent after the broadcast transmission regularly every Tq in the time interval defined as T_check = (T_end-actual-bcast-tx + FoCAvailDelay_min_so, T_end-actual-bcast-tx + FoCAvailDelay_max_so), where T_end-actual-bcast-tx is the end of the actual broadcast transmission date of the program.
2. The results of the online availability checks are used to update the notification unit 260 accordingly (S610). The notification unit 260 updates the notification box shown in Fig. 4.

In the case of multiple-occurrence programs, the following three steps are performed:
1. Queries for the pair of episodes of program and broadcast channel are sent after each scheduled episode regularly every Tq in the time interval defined as T_check = (T_end-actual-bcast-tx + FoCAvailDelay_min_mo, T_end-actual-bcast-tx + FoCAvailDelay_max_mo) where T_end-actual-bcast-tx is the end of the actual broadcast transmission date of the episode.
2. The results of the online availability checks are used to update the notification unit 260 accordingly (S610). The notification unit updates the notification box shown in Fig. 4.
3. Finally, the program availability period calculating unit 250 sets timers to trigger the first step again for the next scheduled episode.

It is once more emphasized that the detailed description as given above has been given for illustrative purposes only, and the exemplary embodiments, parameters and values introduced therein are not considered to limit the invention as defined by the appended claims.

In particular, this concerns the values for parameters such as D, Tq, T_cu and N. In general, these parameters can be preset, or the user can be given the option to set/modify these values, in compliance with a particular implementation of the invention.

Furthermore, it is noted that the calculation schemes as described above have been described for checking the availability of free-of-charge. However, it is straightforward for a person skilled in the art to apply a respective calculation of online availability of program contents at all. A further variant covers calculation for notification of special price promotions for content, i.e. prices that are lower than usual, wherever a particular business model of the content and/or service provider allows such a situation. The main idea remains the same: the user is notified of a start and end period where media acquisition is available at all, or is especially convenient.

The mechanism described in the previous sections allows that notifications on available content are provided as soon as possible. Thus, notifications can be automatically provided as pop-ups while watching TV.

Alternatively, in order to restrict bandwidth consumption, the TV set may refrain from sending queries when the user is watching TV. In this way, only when the user is actively parsing the EPG, availability checks are sent and notification is displayed in a reserve notification area as shown in Fig. 4.

In the above description, it has been assumed for simplicity that single-occurrence programs share a common FoC availability delay value. However, the value may also vary. A variant of the described method would be that the program availability period calculating unit 250 performs a calculation using a number of availability checks and more information such as the duration, if there is a possibility of inferring an FoC availability delay value depending on the length of the program itself. For example: all programs are made available online 1.5 * program_length after the end of the broadcast. It is noted that the particular value of 1.5 is given by way of example only.

Further, for simplicity it has been assumed that all single-occurrence programs of a broadcaster have the same FoC period rule value. However, the value may be different for each program, depending, for instance, on its genre or a value perceived by the broadcaster. Although such mechanisms have not been described in detail herein, a person skilled in the art would be able to extend the method described in a straightforward manner: by storing more complex period rules together with attributes such as genre, etc. in the databases.

In summary, the present invention allows notifications about online availability for TV programs that have been broadcast from broadcasters' web services (catch-up services). The notification functionality is integrated into an electronic program guide functionality in a manner that does not require any complicated multi-step user interaction. Users can download or watch by streaming a broadcast program that is available online via a web service upon the notification. The invention is particularly applicable for making notifications about programs availability free-of-charge.

## Claims

1. An electronic notification device for notifying a user (140) about availability of a program on a network (112) that has been broadcast in the past, said electronic notification device comprising:
a user interface for indicating programs scheduled for broadcast and for marking a program that is desired for watching,
a network interface (115) for connecting said electronic notification device to said network,
a marked program holding unit (220) for holding information about a marked program,
a viewing checking unit (230) for determining, after the time of broadcast, whether the marked program has been watched,
a program availability checking unit (240) for checking availability of the marked program on the network (112), and
a notification unit (260) for notifying a user (140) about availability on the network (112) of a marked program that has been broadcast but not been watched.

2. An electronic notification device according to claim 1, further including an Electronic Program Guide, wherein
said user interface being integrated with said Electronic Program Guide.

3. An electronic notification device according to claim 1 or 2, further comprising a free-of-charge period calculating unit (250) for calculating a period of time during which a marked program is available on the network (112) for watching free of charge, wherein
said notification unit (260) further notifying a user (140) about said period of time during which the program is available on the network (112) for watching free-of-charge.

4. An electronic notification device according to claim 3, wherein said free-of-charge period calculating unit (250) calculating said period of time based on said information about the marked program held in said marked program holding unit (220), current time information and a period rule.

5. An electronic notification device according to claim 3 or 4, wherein said free-of-charge period calculating unit (250) calculating said period of time based on an availability delay, said availability delay defining a duration from the broadcast transmission until the marked program is available on the network for watching free-of-charge.

6. An electronic notification device according to claim 4 or 5, wherein said free-of-charge period calculating unit (250) further being adapted to calculate said period rule and/or said availability delay.

7. An electronic notification device according to any of claims 1 to 6, wherein said notification being issued upon a user request input via said user interface.

8. A method of notifying a user (140) about availability of a program on a network (112) that has been broadcast in the past; said method being performed by an electronic notification device (200) and comprising the steps of:
marking (S500) a program indicated as scheduled for broadcast by a user interface of said electronic notification device (200),
holding (S570) information about the marked program,
determining, after the time of broadcast, whether the marked program has been watched,
checking (S600) availability of the marked program on the network (112), and
notifying (S61 0) a user about availability on the network (112) of the marked program if the marked program has been broadcast but not been watched.

9. A method according to claim 8, wherein said user interface being integrated with an Electronic Program Guide.

10. A method according to claim 8 or 9, further comprising the steps of
calculating (S585) a period of time during which a marked program is available on the network (112) for watching free of charge, and
notifying (S610) a user about said period of time during which the program is available on the network (112) for watching free-of-charge.

11. A method according to claim 10, wherein said free-of-charge period being calculated based on said held information about the marked program, current time information and a period rule.

12. A method according to claim 10 or 11, wherein said free-of-charge period being calculated based on an availability delay, said availability delay defining a duration from the broadcast transmission until the marked program is available on the network for watching free-of-charge.

13. A method according to claim 11 or 12, further comprising the step of calculating (S540, S550) said period rule and/or the step of calculating (S530, S560) said availability delay.

14. A method according to any of claims 8 to 13, further comprising the steps of inputting a user request for said notification via said user interface, and
issuing said notification upon said request.

15. A computer program product including a computer readable medium having computer readable program code embodied thereon, the program code causing a computer (200) to execute the steps of a method according to any of claims 8 to 14 when loaded into the computer (200).
